# EUROPEAN PATENT SPECIFICATION

(11) **EP 1 055 512 B1**
(45) Date of publication and mention of the grant of the patent: **15.02.2006**
(21) Application number: 00110780.4
(22) Date of filing: 20.05.2000
(51) Int. Cl.: B32B 27/06

(54) **Molded article and process for preparing same**
Formteil sowie Verfahren zu seiner Herstellung
Article moulé et son procédé de fabrication

(30) Priority: 26.05.1999 US 320525; 24.04.2000 US 557231
(43) Date of publication of application: 29.11.2000
(73) Proprietor: University of Massachusetts, Boston, MA 02108 (US)
(72) Inventor: Ellison, Thomas M., Fort Mill, South Carolina 29715 (US); McCarthy, Stephen P., Tynesboro, Massachussetts 01879 (US); Delusky, Arthur K., Detroit, Michigan 48214 (US); Guan, Qing, Lowell, Massachusetts 01854 (US)
(74) Representative: Klocke, Peter

(56) References cited:
- US-A- 4 840 832
- US-A- 5 238 725
- US-A- 5 709 925

## Description

The present invention refers to a colored molded plastic article and a process for forming the same.

### BACKGROUND OF THE INVENTION

In accordance with US-A-5 401 457 a process is provided for forming a color coated article. In accordance with the procedure of the '457 patent, a film is placed substantially flat over a mold cavity and deformed by a core half and by molten plastic entering through a sprue. However, the procedure of the '457 patent is difficult to control, particularly when molding parts with large surfaces and sharply varying curvatures. The difficulties increase when the plastic is pressure molded at high enough temperatures to reduce the film strength substantially, as is the case with conventional injection molding procedures.

In accordance with US-A-613 2 669 a color coated article is prepared by depositing molten plastic on a film and forming the film-molten plastic combination in a mold cavity. This procedure and the resultant article effectively and efficiently forms a color coated article. However, it would be particularly desirable to further improve the resultant article particularly degradation of the film, particularly thinning of the color layer after forming.

US-A-5238725 discloses that thermoplastic resin faced core structures can be used as intermediate products to form a final decorated product in one step within minutes. The sandwich panels which are used have been made with honeycomb core and thermoplastic facesheets without the use of solvence or extra adhesives for bonding of facesheets and core material. For preparing a composite which includes a honeycomb core edge-trimmed with a foam edging, the edge-trimmed core fibre reinfored thermoplastic resin facesheets are bonded to the core and an decorative film adhered to one of the facesheets. The composite is produced by an apparatus which includes a high energy heat source having upper and lower heating surfaces and a press having upper and lower heating platens. The forming operation starts with a placement of the panel into the oven and subsequent heating and pressing of the composite. High energy heating sources are necessary.

Accordingly, it is a principal objective of the present invention to provide an improved plastic-film laminate which may be conveniently and expeditiously obtained.

It is a still further object of the present invention to provide an improved laminate as aforesaid which reinforces the film without loss of properties therein and without jeopardizing the ease and convenience of final article preparation.

Further objects and advantages of the present invention will appear hereinbelow.

### SUMMARY OF THE INVENTION

In accordance with the present invention as claimed, the foregoing objects and advantages are readily obtained.

By molding a plastic article from a reinforced composite laminate, the colored, decorative layer maintains color uniformity in the molded article.

According to this invention, there is provided a colored molded article, which comprises
a plastic layer (34, 40);
an outer film layer (10, 44) over said plastic layer and forming a composite laminate therewith, said outer film layer (10, 44) having an inner surface (18) adjacent and bonded to said plastic layer (34, 40) and an outer surface (20) opposed to said inner surface (18);
a reinforcing material (16, 42) selected from the group consisting of metal, plastic, carbon fibers, fiberglass, textile and mixtures thereof adhered to the inner surface (18) of said outer film layer (10), said reinforcing material (16, 42) is at least partly embedded in the inner surface (18) of said outer film layer (10,44) and the reinforcing material (16, 42) and/or the plastic layer (34, 40) includes reinforcing fibers having long fibers of at least about 30 mm long; and
a colored, decorative layer (10', 44') with color uniformity on the outer surface (20) of said outer film layer (10, 44).

According to this invention, there is as well provided a process for manufacturing a colored molded plastic article with the following steps:
providing a composite laminate having an outer film layer (10) with an inner surface (18) and an outer surface (20) opposed to said inner surface (18), a reinforcing material (16) selected from the group consisting of metal, plastic, carbon fibers, fiberglass, textile and mixtures thereof adhered to said inner surface (18) at least partly embedded in the outer film layer (10), and a colored, decorative layer (10') on said outer surface (20);
placing said composite laminate over a mold (12) having a cavity (30) and mold surface forming the cavity (30), with the colored layer (10') directed to the cavity (30);
providing reinforcing fibers having long fibers of at least about 30 mm in the plastic material for the plastic layer (34, 40) and/or in the reinforcing material (16, 42); depositing hot plastic material on the reinforcing material (16) for forming a plastic layer (34, 40);
pressuring of the hot plastic material and the composite laminate into the mold cavity (30) and against the mold surface thereby providing high enough pressures for mold conformance of all layers (34, 16, 10, 10') and carrying out simultaneously forming of colored layer (10'), outer film layer (10), reinforcing layer (16) and plastic layer (34, 40).

In the preferred embodiment, the colored layer has a thickness of less than 0.254 mm (0.01 inch) and desirably from 25.4 mm - 152.4 mm (0.001-0.006 inch). It is a particular advantage of the present invention that the resultant molded article has a color change after molding of less than 2 McAdam units (McAdam is a color difference measure unit system which defines a distance in different tristimulus spaces particularly in view of the thin colored layer and the molding operation).

In a preferred embodiment of the present invention, the molded plastic article comprises: a composite laminate having an outer film layer with an inner surface and an outer surface opposed to said inner surface, an inner plastic layer bonded to said inner surface, and a colored, decorative layer on said outer surface; a first reinforcing material bonded to the inner plastic layer selected from the group consisting of metal, plastic, carbon fibers, fiberglass, textile and mixtures thereof; and a second reinforcing material bonded to the inner surface of the outer film layer between the first reinforcing material and the outer film layer which prevents the first reinforcing material from being visible through the colored layer.

A preferred process of the present invention comprises: providing a composite laminate having an outer film layer with an inner surface and an outer surface opposed to said inner surface, an inner plastic layer bonded to said inner surface and a colored, decorative layer on said outer surface; reinforcing the composite laminate with a firs reinforcing material bonded to the inner plastic layer selected from the group consisting of metal, plastic, carbon fibers, fiberglass, textile and mixtures thereof; further reinforcing the composite laminate with a second reinforcing material bonded to the inner surface of the outer film layer between the first reinforcing material and the outer film layer which prevents the first reinforcing material from being visible through the colored layer; and molding a plastic article from said reinforced composite laminate wherein the colored, decorative layer maintains color uniformity in said molded article.

Further features of the present invention will appear from the following disclosure.

The present invention will be more readily understandable from the following illustrative drawings, wherein:
FIG. 1 is a partly schematic view showing one embodiment for the preparation of the molded article of the present invention;
FIG. 2 is a partial sectional view showing the article prepared in FIG. 1; and
FIGS. 3-6 show further embodiments of the present invention.

### DETAILED DESCRIPTION OF PREFERRED EMBODIMENTS

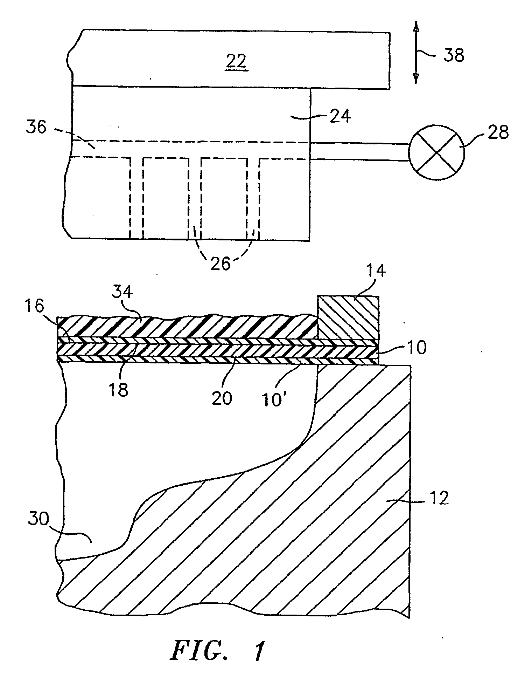

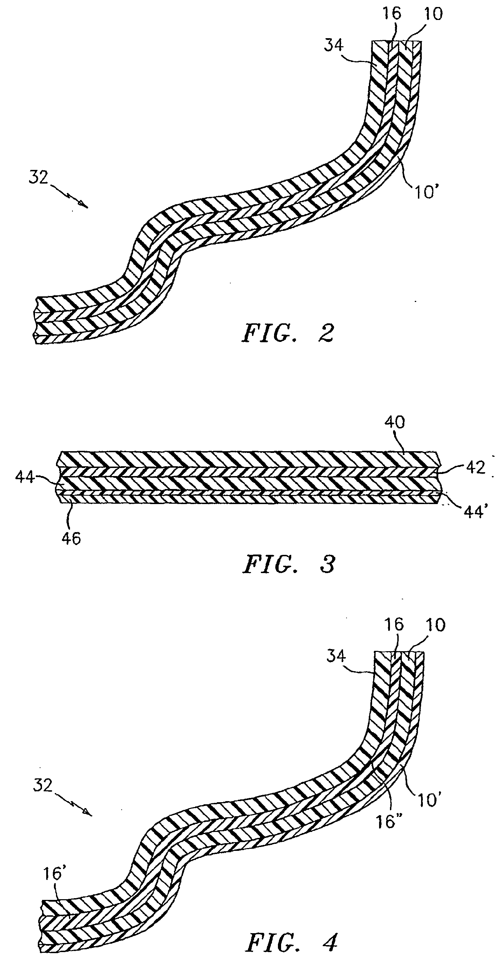

In accordance with the illustrative embodiment of FIG. 1, film or blank 10 is held over mold 12 by clamping frame 14, with reinforcing material 16 adhered to or at least partly embedded in the inner face 18 of film 10. Outer face 20 of film 10 is opposed to the inner face and forms the external surface of the film or blank 10 in the embodiment of FIG. 1. Colored, decorative layer 10' is on the outer face or outer surface 20 of film 10. Platen 22 is shown with a forming mandrel 24, which is desirably a solid metal mandrel but which may also for example be an elastomeric mandrel, and which may contain air slots 26 and pressure control means 28 connected thereto. Mold 12 includes mold cavity 30 therein which forms the shape of the desired molded article 32 shown in FIG. 2. Naturally, any desired mold cavity shape may be used. In addition, if desired, one could texture the mold surface to have a desired textured finish on the final product. Hot plastic 34 is injected or deposited on the film 10 reinforcing material 16 combination by any desired means, as from an extruder, to form the layered structure shown in FIG. 1. As shown in the embodiment of FIG. 1, slots 26 if used intersect a manifold slot 36 which is connected to a source of fluid pressure.

In operation, the mandrel 24 enters the clamping frame 14. Pressure air is applied to slots 26 if used expanding the slots into passages. Thereby, pressure is applied to the deposited plastic 34 and the colored layer 10'- film 10 - reinforcing material combination. Pressure may also be present in mold cavity to support the layers over the mold before molding, as by air slots in mold 12 (not shown), which should be controllably released at the same time as the layers are formed into the mold cavity. This will result in forming the layers by blow molding into the molded article shown in FIG. 2. The mandrel 24 moves simultaneously downward into the mold cavity 30 in the direction of arrow 38. As the plastic and film reach the mold surface, the mandrel continues and conforms to the surface of the plastic away from the film 10 - reinforcing material layers, and continued pressure by the platen results in forming of the final desired article, as shown in FIG. 2. The mandrel and mold are preferably cooled. If a solid mandrel is used, it should conform to the desired shape of the final article. If desired, the colored layer - film-reinforcing material combination may first be conformed to the shape of mold cavity 30, mandrel 24 seated in mold 12 and plastic material 34 injected against the film-reinforcing material to form the final article.

The resultant molded article 32 includes the outer film layer 10, outer colored layer 10', inner reinforcing layer 16 which is adhered to and/or at least partly embedded in the outer film layer, and the inner plastic layer 34. The resultant molded article 32 has the desired shaped configuration determined by the shape of the mold cavity. Moreover, advantageously, despite the forming operation the colored layer is characterized by color uniformity and a color coated article is formed in a simple and convenient manner.

The blank or film 10 is plastic, and any desired plastic material may be used for the blank 10 or molten plastic material 34, for example, polyolefins, polyurethanes, acrylonitrile butadiene styrene (ABS), polyvinyl chloride, polystyrene, polycarbonates, polyesters, etc., and desirable blends of the foregoing. The colored layer may be directly coated on the film or blank or may be a separate layer as a colored plastic layer as above. Layers 10 and 34 may be the same or different materials. If the same materials are used, one can obtain melt bonding between the materials, as through openings of the reinforcing material. If different materials are used, one can achieve a mechanical bond into fibers of the reinforcing material, or adhesive bonding can be used. The layers may be cut or stamped from a web and a supply having the size and shape to fit over or into the mold cavity maintained adjacent the mold for transfer to the mold as needed and the colored layer coated on the film. The depth of color on the colored layer may be varied to at least partially accommodate thinning during processing and to at least partially adjust the color depth to the amount of deformation any given portion will undergo. Thus, for example, thicker paint coatings may be applied to selective blank or film locations that are to obtain greater deformation during processing in order to at least partially obtain uniformity of color in the final molded product. This is difficult to achieve, however, and may not be entirely successful. The present invention, however, effectively minimizes color thinning. The blank or film may, for example, be gravure printed with a thin color layer.

Thus, in accordance with the present invention, a reinforcing material 16 is adhered to and/or at least partly embedded in the inner surface of the film or blank in order to eliminate or significantly minimize the color thinning. Desirably, the reinforcing material is a textile material, synthetic or natural. However, one could readily use a fiberglass mat or scrim or a random fiberglass material, or metal or additional plastic. The metal should be a metal mesh or metal which will elongate or form under pressure. The plastic should be selected to have a tensile strength at the forming temperature sufficient to distribute the forming forces. The fiberglass mat or scrim is desirably knitted. This will effectively reinforce the film without jeopardizing the color tones of the color-coated film and without interfering with the forming operation. The reinforcing material serves to distribute the elongating forces produced by the engagement with the most protruding areas of the mold core. Thus, the entire film 10 and color layer 10' is caused to elongate rather than the immediate area of contact. Accordingly, film and color layer thickness remain relatively uniform after the part is formed.

The blank and colored layer may be applied to the mold with robot means or removably adhered to a carrier film strip. The carrier film strip may be provided with means to register the position of the colored blanks relative to the mold half onto which the blanks are to be placed, e.g., edge perforations. The carrier, with the blanks attached, may then be supplied from a roll. Once the blank and mold are juxtaposed, suction is applied to the edge of the blank by the mold, as through channels, sufficient to separate the blank from the carrier strip. Naturally, other transfer means may readily be used.

Naturally, any other convenient or desirable plastic delivery means or molding procedure may conveniently be used while still retaining the advantages of the present invention, as for example alternative compression molding techniques, injection molding or injection blow molding.

Similarly, multiple plastic layers may be deposited on the film-reinforcing material combination. Alternatively, one polymer could be deposited in a designed pattern, and a second or a plurality of second polymers deposited in a designed pattern. This could be done with one or more extruders feeding for example separate channels to deposit a predesigned pattern of multiple resins. As a further alternative, one could sequentially feed polymers of different characteristics to provide designed properties in the finished product.

A significant feature of the present invention is the uniformity of heating of the colored film or blank without having to resort to external means, and the assurance that the forming operation is carried out simultaneously, colored film or blank, reinforcing material and the backing layer, followed by the application of high enough molding pressures to provide mold conformance of all layers. The finish of the film is thereby preserved and optically detectable imperfections and color thinning are avoided. Also, this procedure requires much lower clamping pressure than conventional procedures.

While the foregoing procedure is aimed primarily at application in the exterior of vehicles, it should be noted that there are many other types of components that would benefit from the subject process of molding, as compression molding, with a colored finish and with an accurately molded article, particularly for large household appliances and architectural components. The foregoing produces improved final product, particularly large, panel-like thick parts and eliminates or reduces color thinning and degradation of the film coating. The present invention is useful with any plastic film since it avoids local degradation or thinning of the plastic film.

As a further alternative, one can use co-extrusion for the molten plastic. Plastic from a die may be extruded in co-layers or in multiple passes from two heads to deposit different polymers and/or compositions and/or fillers.

As a still further alternative, one may employ a variety of types of films, as a conductive film (EMI-RFI (ElectroMagnetic Inference - Radio Frequency Infernece), a film with UV and/or infrared absorption characteristics, or any desired and convenient film with desired range of properties to achieve particular results.

Thus, in accordance with the present invention, the molded film finish appearance is improved by providing a reinforcement on the inner surface of the film to achieve uniform thinning of the film. In addition, the present invention may improve the strength of the molded part and its impact resistance.

The reinforcing material is adhered to or at least partly embedded in the inside surface of the plastic film, as to a thermoplastic sheet, to form a reinforced sheet. A clear coating, as a plastic coating, may then be applied to the outer surface of the reinforced sheet. The clear coat could be a tinted or translucent surface in order to convey any desired effect in the final product. The resultant product is shown in FIG. 3, wherein the injected or deposited plastic layer 40 is on the inside, followed by reinforcing material 42, which in turn is followed by film 44 and colored layer 44' and with a clear outside coating 46 over film 44. By first at least partly incorporating the reinforcement material into the thermoplastic film sheet intimate saturation and bonding is assured between the reinforcement material and film. Subsequently, in the molding operation, it is only necessary to bond the reinforced film sheet to the molding resin. A base coat/clear coat outside coating may be applied to the colored film sequentially in one process operation or separately in a plurality of process operations. If the scrim, the outside coating will aid in minimizing fibers extending through to the outside of the coated article. Alternatively, the film may be extruded between the reinforcing material and clear outside layer.

High reinforcement loadings in the shape of long fiber reinforcement, such as glass fibers, carbon fibers, natural fibers, with fiber lengths of at least 30 mm and possibly of at least 100 mm, are concentrated where desired in the molded part. In addition, reinforcing material of the present invention, as fibers particularly the aforesaid long fibers, may effectively be included in plastic layer 34. The resulting part may be desirably designed to have rigid, high modulus surface zones and a high impact resistant interior zone.

The resulting molded article with a clear outside coating may be thermoformed to make rigid appliques having excellent dimensional stability.

Further improvement is obtained by the application of registered reinforcement. In registered reinforcement, the reinforcing material is placed to register with the topography of the surface to be molded. The deeper the draw or surface extension, the greater or denser the reinforcement.

This is shown in FIG. 4 which shows molded article 32 including film 10 and outside colored layer 10', reinforcing material 16 and plastic 34 obtained in accordance with the embodiment of FIG. 1. However, reinforcing material 16 includes a relatively thicker area 16' at the area of deeper draw and a relatively thinner area 16'' at the area of more moderate draw. Registered reinforcement may be achieved by any means that restricts stretch of the film finish in areas of greater draw, forcing the finish to stretch more in areas of lesser draw at the molding temperature. Representative examples of reinforcing materials are: woven, braided, knitted or non-woven fibrous material such as glass, synthetic polymers or natural fibers. Alternatively, the reinforcing material may be a compatible (bondable) polymer film that has greater resistance to stretch than the film finish under the molding conditions of temperature and pressure. The reinforcing material may be pre-applied to the film finish by any means, such as with adhesive, static cling, or heat and pressure, to hold it in place and in registry until molding takes place. Alternatively, the reinforcing material may be placed manually or mechanically after the film finish is secured on the mold cavity.

The present invention may desirably use a fiber matte as reinforcing material, which may be woven, non-woven or filament strands, which may be glass, plastic carbon or metal fibers, with the fiber being selected for its cost and performance properties.

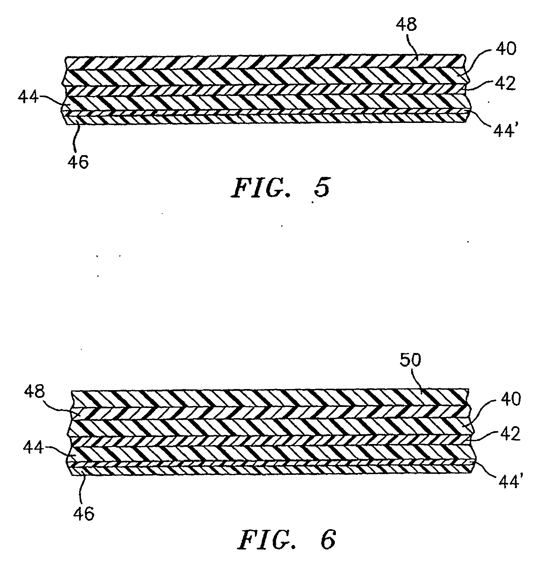

As indicated hereinabove, the reinforcing material (as fibers) may also be applied to the deposited plastic. Reinforcement in one direction is possible by feeding filaments onto the deposited plastic as the die traverses the mold. Alternatively, a reinforcement may be placed on top of the deposited resin, manually or robotically, just prior to clamp closure. Further, the matte may be preshaped to the contour of the mold core and placed onto and held on the core prior to closing the mold. Pre-shaping is advantageous in the case of deep draws or severe contours that may create wrinkles in a flat reinforcing sheet. This embodiment is shown in FIG. 5 which includes additional reinforcing material 48 over deposited plastic 40 as shown in FIG. 3.

In a further embodiment shown in FIG. 6, a reinforcing material, as a fiber matte 48 may be placed on deposited resin 40 and a second resin deposit 50 made to encapsulate the reinforcing material before the mold is closed.

In a further embodiment, a matte of one description may be placed on the film prior to resin deposit, the resin is then deposited and a second matte of the same or different description may be placed on the hot resin and the clamp closed. The result is an "I-Beam" effect in which the reinforcement is concentrated on two sides of the molding resin.

It is a particular advantage of the present invention that reinforcement in the colored film layer serves to minimize localized thinning of the film due to heat and pressure as the mold closes. The reinforcement causes film to be drawn/pulled from adjacent areas to the area of greatest stretch, thus dissipating the stretch to a greater area and reduction of thinning in the localized area.

Thus, for example, the reinforcing layer or layers provide a measure of structural improvement (either impact resistance or flexural strength) to the overall molded part. In addition, especially in the case of fibrous film reinforcements such as natural fibers, plastic fibers or the like, the reinforcing layer or layers provide a mechanical bond for molding or deposited resins, such as resins that are dissimilar to.the carrier film.

A preferred film reinforcement is a non-woven scrim or mat which contains olefin fibers, especially of the same composition as the film layer, and at least one high temperature melting fiber selected from high melt polymer fibers, glass fibers, carbon fibers or metal fibers and mixtures of these. The olefin fibers will melt bond to the carrier film and also to the molding resin insuring bond integrity throughout the molded article. The high temperature fiber or fibers provide strength after the olefin fibers soften so that stretching forces are distributed laterally to adjacent areas of the film that are under lesser stress. The high temperature fibers also provide a measure of strength and impact resistance to the molded article. Examples of high melt temperature polymer fibers are polyethylene terephthalate (PET), Kevlar, and liquid crystal polymers. Fibers in the mat are desirably thin in cross section to minimize read through at the surface and are desirably uniformly distributed in the mat. The mat may be made thicker in certain areas to register with areas of deep draw on the molded article. The non-woven scrim or mat may contain only high temperature melting fibers. In this case, the scrim bonds mechanically to the carrier film and to the molding resin or is mechanically locked in between the carrier film and molding resin by molding resin penetrating through the scrim and bonding to the carrier film.

In a preferred embodiment of the present invention, two (2) reinforcing layers are provided as in FIGS. 5 and 6, with the outermost reinforcing material 42 preventing the innermost reinforcing material 48 from being visible through the colored layer. The outermost reinforcing material 42 should be situated between the innermost reinforcing material 48 and the outer film layer 44.

A particularly advantageous outermost reinforcing material is a foam plastic, as for example an olefin foam or polyurethane foam plastic, such as a closed cell polypropylene foam. Naturally, other materials can be used as the outermost reinforcing material to prevent the innermost reinforcing material from being seen through the colored layer, as for example, metal foil, or plastic foil layers.

Thus, for example, the outermost reinforcing material, as reinforcing material 42 in FIGS. 5-6, may desirably be a foamed polymer that can be either adhesively bonded or melt bonded, if an olefin foam is used as layer 42 to be bonded to a similar olefin carrier film as layer 44. The foam layer reinforces the article and insulates the carrier film. Thus, the carrier film retains strength to a greater degree and can resist localized thinning. The foam layer also cushions the structure and conforms to the resin layer 40 so that surface read through of the innermost reinforcing layer 48 is minimized or entirely eliminated. This is a particular advantage when the innermost reinforcing layer 48 is a fibrous layer. The preferred outermost reinforcing layer is a thin closed cell olefin foam sheet that will melt bond to the carrier film.

A particularly preferred reinforcing material is the woven textiles or a woven fiberglass mat discussed hereinbelow. The threads used in weaving are naturally larger in diameter than the individual fibers used to make a random mat. However, particularly at high elongation of the carrier film, the woven thread pattern may become visible through the surface of the formed part. Naturally, this is undesirable. Therefore, it is particularly advantageous to use the woven textiles as the innermost reinforcing layer 48. together with a masking reinforcing material as a closed cell olefin foam as the outermost reinforcing layer 42 so that the thread pattern is not seen from the surface of the formed part.

As a further alternative, the outermost reinforcing layer, which may be the sole reinforcing layer, could be coextruded with outer film layer 10 or 44 so that the outer film 10 or 44 is a monolithic reinforced film. As a still further alternative, color layer 10' or 44' need not be a separately defined layer but could be admixed with outer film 10 or 44 so that the color forms the outermost surface of the molded article, optionally covered by a clear coat. Naturally also where only a single reinforcing material is used, the reinforcing material may be a foam plastic if desired.

## Claims

1. A colored molded article, which comprises
a plastic layer (34, 40);
an outer film layer (10, 44) over said plastic layer and forming a composite laminate therewith, said outer film layer (10, 44) having an inner surface (18) adjacent and bonded to said plastic layer (34, 40) and an outer surface (20) opposed to said inner surface(18);
a reinforcing material (16, 42) selected from the group consisting of metal, plastic, carbon fibers, fiberglass, textile and mixtures thereof adhered to the inner surface (18) of said outer film layer (10), said reinforcing material (16, 42) is at least partly embedded in the inner surface (18) of said outer film layer (10,44) and the reinforcing material (16, 42) and/or the plastic layer (34, 40) includes reinforcing fibers having long fibers of at least about 30 mm long; and
a colored, decorative layer (10', 44') with color uniformity on the outer surface (20) of said outer film layer (10, 44).

2. An article according to claim 1, wherein said outer film (10, 44) is plastic.

3. An article according to claim 1, wherein said molded article includes a clear outermost coating (46) over said colored layer (10', 44').

4. An article according to claim 1, wherein the molded article (32) includes additional reinforcing material (48) on the plastic layer (34, 40) on the side opposed to the film layer (10, 44).

5. An article according to claim 4, wherein the molded article (32) includes an additional plastic layer (50) over the additional reinforcing material (48).

6. An article according to claim 1, including:
a first, innermost reinforcing material(48) bonded to the plastic layer (40); and
a second outermost reinforcing material (42) bonded to the inner surface of the outer film layer (44) between the first reinforcing material (48) and the outer film layer (44), preferably a foam plastic, metal foil or plastic foil layer, which prevents the first reinforcing material (48) from being visible through the colored layer (44').

7. A molded article according to claim 6, wherein said second reinforcing material (42) is a foamed plastic preferably a closed cell olefin foam which preferably is melt bonded to the outer film layer (44).

8. A molded article according to claim 6, wherein said colored layer (44') is a separate layer from the outer film layer (44) and bonded thereto.

9. A molded according to claim 6, wherein the outer film layer (44) and colored layer (44') are mixed together.

10. A molded article according to claim 6, wherein said first reinforcing material is a woven textile and/or the second reinforcing material contains olefin fibers and at least one high melting fiber having a melting point higher than the olefin fibers.

11. A molded article according to claim 1, including a reinforcing material (16) having an area (16') of deeper draw and a relative thinner area (16") of more moderate draw, thereby providing an area (16') where the molded article has more surface extension than the area (16'') where the molded article has less surface extension.

12. Process for manufacturing a colored molded plastic article with the following steps:
providing a composite laminate having an outer film layer (10) with an inner surface (18) and an outer surface (20) opposed to said inner surface (18), a reinforcing material (16) selected from the group consisting of metal, plastic, carbon fibers, fiberglass, textile and mixtures thereof adhered to said inner surface (18) at least partly embedded in the outer film layer (10), and a colored, decorative layer (10') on said outer surface (20);
placing said composite laminate over a mold (12) having a cavity (30) and mold surface forming the cavity (30), with the colored layer (10') directed to the cavity (30);
providing reinforcing fibers having long fibers of at least about 30 mm in the plastic material for the plastic layer (34, 40) and/or in the reinforcing material (16, 42); depositing hot plastic material on the reinforcing material (16) for forming a plastic layer (34, 40);
pressuring of the hot plastic material and the composite laminate into the mold cavity (30) and against the mold surface thereby providing high enough pressures for mold conformance of all layers (34, 16, 10, 10') and carrying out simultaneously forming of colored layer (10'), outer film layer (10), reinforcing layer (16) and plastic layer (34, 40).

13. The process according to claim 12, including the step of providing additional reinforcing material (42) on the plastic layer (34, 40) on the side opposed to the outer film layer (10).

14. The process according to claim 13, including the step of providing an additional plastic layer (44) over the additional reinforcing material (42).

15. The process according to claim 12, including:
reinforcing the composite laminate with a first, innermost reinforcing material (48) bonded to the inner plastic layer (40); and
further reinforcing the composite laminate with a second outermost reinforcing material (42), preferably a foam plastic, metal foil or plastic foil layer, bonded to the inner surface (18) of the outer film layer (10) between the first reinforcing material (48) and the outer film layer (10), which prevents the first reinforcing material (48) from being visible throught the colored layer (44').

16. The process according to claim 15, including providing a non-woven second reinforcing material (48) consisting of at least one olefin fiber and at least one high melting fiber having a melting point higher than the olefin fiber.

17. The process according to claim 15, including providing a foamed plastic as the second reinforcing material (48).

18. The process according to claim 19, including melt bonding the second reinforcing material (48) to the outer film layer (10).

19. The process according to claim 15, including coextruding the second reinforcing material (48) and outer film layer (10).

20. The process according to claim 12, including a reinforcing material (16) havine an area (16') of deep draw and a relative thinner area (16") of more moderate draw, thereby providing an area (16') where the molded article has more surface extension than the area (16'') where the molded article has less surface extension during the movement in the cavity (30).

## Revendications

1. Article moulé coloré comprenant
une couche de plastique (34, 40) ;
une couche externe formant film (10, 44) sur ladite couche de plastique et formant un laminé composite avec celle-ci, ladite couche externe formant film (10, 44) ayant une surface interne (18) adjacente et liée à ladite couche de plastique (34, 40) et une surface externe (20) opposée à ladite surface interne (18) ;
un matériau de renforcement (16, 42) sélectionné dans le groupe comprenant le métal, le plastique, la fibre de carbone, la fibre de verre, le textile et des mélanges de ces matériaux liés à la surface interne (18) de ladite couche externe formant film (10), ledit matériau de renforcement (16, 42) étant noyé, au moins en partie, dans la surface interne (18) de ladite couche externe formant film (10, 44) et le matériau de renforcement (16, 42) et/ou la couche de plastique (34, 40) comprend des fibres de renforcement contenant des fibres longues de 30 mm de longueur au moins ; et
une couche décorative colorée (10', 44') de couleur uniforme sur la surface externe (20) de ladite couche externe formant film (10, 44).

2. Article selon la revendication 1, dans lequel ledit film externe (10, 44) est en plastique.

3. Article selon la revendication 1, dans lequel ledit article moulé comprend un revêtement externe transparent (46) sur ladite couche colorée (10', 44').

4. Article selon la revendication 1, dans lequel l'article moulé (32) comprend un matériau de renforcement supplémentaire (48) sur la couche de plastique (34, 40) sur le côté opposé à la couche formant film (10, 44).

5. Article selon la revendication 4, dans lequel l'article moulé (32) comprend une couche plastique supplémentaire (50) sur le matériau de renforcement supplémentaire (48).

6. Article selon la revendication 1, comprenant :
un premier matériau de renforcement interne (48) lié à la couche de plastique (40) ; et
un deuxième matériau de renforcement externe (42) lié à la surface interne de la couche externe formant film (44) entre le premier matériau de renforcement (48) et la couche externe formant film (44), de préférence une mousse de plastique, un feuillard métallique ou une couche mince de plastique, qui empêche de voir le premier matériau de renforcement (48) à travers la couche colorée (44').

7. Article moulé selon la revendication 6, dans lequel ledit deuxième matériau de renforcement (42) est une mousse de plastique, de préférence une mousse d'oléfine à cellules fermées qui est, de préférence, liée par fusion à la couche externe formant film (44).

8. Article moulé selon la revendication 6, dans lequel ladite couche colorée (44') est une couche séparée ou distincte de la couche externe formant film (44) à laquelle elle est liée.

9. Article moulé selon la revendication 6, dans lequel la couche externe formant film (44) et la couche colorée (44') sont mélangées.

10. Article moulé selon la revendication 6, dans lequel ledit premier matériau de renforcement est un textile tissé et/ou le deuxième matériau de renforcement contient des fibres d'oléfine et au moins une fibre à haut point de fusion dont le point de fusion est supérieur à celui des fibres d'oléfine.

11. Article moulé selon la revendication 1, comprenant un matériau de renforcement (16) ayant une zone (16') emboutie profondément et une zone relativement plus fine (16") emboutie de façon plus modérée, procurant ainsi une zone (16') où la surface de l'article moulé est plus étendue que dans la zone (16") où la surface de l'article est moins étendue.

12. Procédé de fabrication d'un article en plastique coloré comportant les étapes consistant à :
fournir un laminé composite ayant une couche externe formant film (10) dotée d'une surface interne (18) et d'une surface externe (20) opposée à ladite surface interne (18), un matériau de renforcement (16) sélectionné dans le groupe comprenant le métal, le plastique, la fibre de carbone, la fibre de verre, le textile et des mélanges des ces matériaux liés à la surface interne (18), noyé, au moins en partie, dans la couche externe formant film (10), et une couche décorative colorée (10') sur ladite surface externe (20) ;
placer ledit laminé composite sur un moule (12) ayant une cavité (30) et une surface de moule formant la cavité (30), la couche colorée (10') étant orientée vers la cavité (30) ;
fournir des fibres de renforcement comportant des fibres longues de 30 mm de longueur au moins dans le matériau plastique pour la couche de plastique (34, 40) et/ou le matériau de renforcement (16, 42) ;
déposer une matière plastique chaude sur le matériau de renforcement (16) pour former une couche plastique (34, 40) ;
presser la matière plastique chaude et le laminé composite dans la cavité du moule (30) et contre la surface du moule en procurant ainsi une pression suffisante pour donner à toutes les couches la forme du moule (34, 16, 10, 10') et obtenir simultanément la formation d'une couche colorée (10'), d'une couche externe formant film (10), d'une couche de renforcement (16) et d'une couche plastique (34, 40).

13. Procédé selon la revendication 12, comprenant l'étape consistant à fournir un matériau de renforcement supplémentaire (42) sur la couche plastique (34, 40) sur le côté opposé à la couche externe formant film (10).

14. Procédé selon la revendication 13, comprenant l'étape consistant à fournir une couche plastique (44) supplémentaire sur le matériau de renforcement supplémentaire (42).

15. Procédé selon la revendication 12, comprenant les étapes consistant à :
renforcer le laminé composite par un premier matériau de renforcement interne (48) lié à la couche plastique interne (40) ; et
renforcer davantage le laminé composite par un deuxième matériau de renforcement externe (42), de préférence une mousse de plastique, un feuillard métallique ou une couche mince de plastique, liés à la surface interne (18) de la couche externe formant film (10) entre le premier matériau de renforcement (48) et la couche externe formant film (10), qui empêche de voir le premier matériau de renforcement (48) à travers la couche colorée (44').

16. Procédé selon la revendication 15, comprenant la fourniture d'un deuxième matériau de renforcement non tissé (48) composé d'au moins une fibre d'oléfine et d'au moins une fibre à point de fusion élevé supérieur à celui de la fibre d'oléfine.

17. Procédé selon la revendication 15, comprenant la fourniture d'une mousse de plastique comme deuxième matériau de renforcement (48).

18. Procédé selon la revendication 15, comprenant la liaison par fusion du deuxième matériau de renforcement (48) sur la couche externe formant film (10).

19. Procédé selon la revendication 15, comprenant la co-extrusion du deuxième matériau de renforcement (48) et de la couche externe formant film (10).

20. Procédé selon la revendication 12, comprenant un matériau de renforcement (16) ayant une zone (16') emboutie profondément et une zone relativement plus fine (16") emboutie de façon plus modérée, procurant ainsi une zone (16') où la surface de l'article moulé est plus étendue que dans la zone (16") où la surface de l'article est moins étendue pendant le mouvement dans la cavité (30).

## Patentansprüche

1. Farbiger geformter Gegenstand, umfassend
eine Kunststoffschicht (34, 40);
eine äußere Filmschicht (10, 44) über der Kunststoffschicht, die einen Verbundschichtstoff mit dieser bildet, wobei die äußere Filmschicht (10, 44) eine Innenfläche (18), die an die Kunststoffschicht (34, 40) angrenzt und mit dieser verbunden ist, und eine Außenfläche (20), die gegenüber der Innenfläche (18) angeordnet ist, aufweist;
ein Verstärkungsmaterial (16, 42), das aus der Gruppe bestehend aus Metall, Kunststoff, Kohlenstofffaser, Glasfaserstoff, Gewebe oder Mischungen daraus gewählt ist, und das an die Innenfläche (18) der äußeren Filmschicht (10) geklebt ist, wobei das Verstärkungsmaterial (16, 42) mindestens teilweise in die Innenfläche (18) der äußeren Filmschicht (10, 44) eingebettet ist, und wobei das Verstärkungsmaterial (16, 42) und/oder die Kunststoffschicht (34, 40) Verstärkungsfasern, die lange Fasern mit einer Länge von mindestens ungefähr 30 mm umfassen/umfasst; und
eine farbige Zierschicht (10', 44') mit einheitlicher Farbe an der Außenfläche (20) der äußeren Filmschicht (10, 44).

2. Gegenstand gemäß Anspruch 1, wobei die äußere Filmschicht (10, 44) aus Kunststoff besteht.

3. Gegenstand nach Anspruch 1, wobei der geformte Gegenstand einen farblosen äußersten Überzug (46) über der farbigen Schicht (10', 44') aufweist.

4. Gegenstand nach Anspruch 1, wobei der geformte Gegenstand (32) zusätzliches Verstärkungsmaterial (48) auf der Kunststoffschicht (34, 40) an der Seite, die gegenüber der Filmschicht (10, 44) angeordnet ist, aufweist.

5. Gegenstand nach Anspruch 4, wobei der geformte Gegenstand (32) eine zusätzliche Kunststoffschicht (50) über dem zusätzlichen Verstärkungsmaterial (48) aufweist.

6. Gegenstand nach Anspruch 1, umfassend:
ein erstes, innerstes Verstärkungsmaterial (48), das mit der Kunststoffschicht (40) verbunden ist; und
ein zweites, äußerstes Verstärkungsmaterial (42), das mit der Innenfläche der äußeren Filmschicht (44) verbunden ist, zwischen dem ersten Verstärkungsmaterial (48) und der äußeren Filmschicht (44), vorzugsweise ein Schaumkunststoff, eine Metallfolien- oder Kunststofffolienschicht, und das verhindert, dass das erste Verstärkungsmaterial (48) durch die farbige Schicht (44') zu sehen ist.

7. Geformter Gegenstand nach Anspruch 6, wobei das zweite Verstärkungsmaterial (42) ein geschäumter Kunststoff, vorzugsweise ein geschlossenzelliges Olefin, ist, der vorzugsweise mit der äußeren Filmschicht (44) schmelzverbunden ist.

8. Geformter Gegenstand nach Anspruch 6, wobei die farbige Schicht (44') eine von der äußeren Filmschicht (44) getrennte und mit dieser verbundene Schicht ist.

9. Geformter Gegenstand nach Anspruch 6, wobei die äußere Filmschicht (44) und die farbige Schicht (44') miteinander vermischt sind.

10. Geformter Gegenstand nach Anspruch 6, wobei das erste Verstärkungsmaterial ein gewebter Stoff ist und/oder das zweite Verstärkungsmaterial Olefinfasern und mindestens eine hochschmelzende Faser, die einen höheren Schmelzpunkt als die Olefinfasern aufweist, enthält.

11. Geformter Gegenstand nach Anspruch 1, umfassend ein Verstärkungsmaterial (16), das einen Bereich (16'), der tiefer gezogen ist, und einen relativ dazu dünneren Bereich (16"), der eher mäßig gezogen ist, aufweist, wodurch es einen Bereich (16') bereitstellt, in dem der geformte Gegenstand mehr Oberflächendehnuhg aufweist als im Bereich (16''), in dem der geformte Gegenstand weniger Oberflächendehnung aufweist.

12. Verfahren zum Herstellen eines farbigen geformten Kunststoffgegenstandes mit den folgenden Schritten:
Bereitstellen eines Verbundschichtstoffes, aufweisend eine äußere Filmschicht (10) mit einer Innenfläche (18) und einer Außenfläche (20), die gegenüber der Innenfläche (18) angeordnet ist, ein Verstärkungsmaterial (16), das aus der Gruppe bestehend aus Metall, Kunststoff, Kohlenstofffaser, Glasfaserstoff, Gewebe oder Mischungen daraus gewählt ist, und das an die Innenfläche (18) geklebt ist, wobei das Verstärkungsmaterial (16) mindestens teilweise in die äußere Filmschicht (10) eingebettet ist, und eine farbige Zierschicht (10') an der Außenfläche (20);
Anordnen des Verbundschichtstoffes über einem Formwerkzeug (12), das eine Vertiefung (30) und eine Formwerkzeugoberfläche, welche die Vertiefung (30) bildet, aufweist, wobei die farbige Schicht (10') zur Vertiefung (30) gerichtet ist;
Bereitstellen von Verstärkungsfasern, die lange Fasern mit einer Länge von mindestens ungefähr 30 mm aufweisen, im Kunststoffmaterial für die Kunststoffschicht (34, 40) und/oder im Verstärkungsmaterial (16, 42);
Auftragen heißen Kunststoffmaterials auf dem Verstärkungsmaterial (16) zum Bilden einer Kunststoffschicht (34, 40);
Drücken des heißen Kunststoffmaterials und des Verbundschichtstoffes in die Formwerkzeugvertiefung (30) und gegen die Formwerkzeugoberfläche, wodurch ausreichend hohe Drücke für eine Formübereinstimmung aller Schichten (34, 16, 10, 10') bereitgestellt werden, und wodurch gleichzeitig die Bildung der farbigen Schicht (10'), der äußeren Filmschicht (10), der Verstärkungsschicht (16) und der Kunststoffschicht (34, 40) erfolgt.

13. Verfahren nach Anspruch 12, umfassend den Schritt des Bereitstellens zusätzlichen Verstärkungsmaterials (42) auf der Kunststoffschicht (34, 40) an der Seite, die gegenüber der äußeren Filmschicht (10) angeordnet ist.

14. Verfahren nach Anspruch 13, umfassend den Schritt des Bereitstellens einer zusätzlichen Kunststoffschicht (44) über dem zusätzlichen Verstärkungsmaterial (42).

15. Verfahren nach Anspruch 12, umfassend:
Verstärken des Verbundschichtstoffes mit einem ersten, innersten Verstärkungsmaterial (48), das mit der inneren Kunststoffschicht (40) verbunden ist; und weiteres Verstärken des Verbundschichtstoffes mit einem zweiten, äußersten Verstärkungsmaterial (42), vorzugsweise einem Schaumkunststoff, einer Metallfolien- oder Kunststofffolienschicht, das mit der Innenfläche (18) der äußeren Filmschicht (10) verbunden ist, zwischen dem ersten Verstärkungsmaterial (48) und der äußeren Filmschicht (10), und das verhindert, dass das erste Verstärkungsmaterial (48) durch die farbige Schicht (44') zu sehen ist.

16. Verfahren nach Anspruch 15, umfassend das Bereitstellen eines nicht gewebten zweiten Verstärkungsmaterials (48), das aus mindestens einer Olefinfaser und mindestens einer hochschmelzenden Faser, die einen höheren Schmelzpunkt als die Olefinfaser aufweist, besteht.

17. Verfahren nach Anspruch 15, umfassend das Bereitstellen eines geschäumten Kunststoffs als das zweite Verstärkungsmaterial (48).

18. Verfahren nach Anspruch 19, umfassend das Schmelzverbinden des zweiten Verstärkungsmaterials (48) mit der äußeren Filmschicht (10).

19. Verfahren nach Anspruch 15, umfassend das Koextrudieren des zweiten Verstärkungsmaterials (48) und der äußeren Filmschicht (10).

20. Verfahren nach Anspruch 12, umfassend ein Verstärkungsmaterial (16), das einen Bereich (16'), der tiefer gezogen ist, und einen relativ dazu dünneren Bereich (16"), der eher mäßig gezogen ist, aufweist, wodurch es einen Bereich (16') bereitstellt, in dem der geformte Gegenstand mehr Oberflächendehnung aufweist als im Bereich (16''), in dem der geformte Gegenstand während der Bewegung in die Vertiefung (30) weniger Oberflächendehnung aufweist.
